# EUROPÄISCHE PATENTSCHRIFT

(11) **EP 2 065 128 B1**
(45) Veröffentlichungstag und Bekanntmachung des Hinweises auf die Patenterteilung: **13.04.2011**
(21) Anmeldenummer: 08020549.5
(22) Anmeldetag: 26.11.2008
(51) Int. Cl.: B23Q 11/00

(54) **Elektrowerkzeug**
Electrical tool
Outil électrique

(30) Priorität: 29.11.2007 DE 102007057531
(43) Veröffentlichungstag der Anmeldung: 03.06.2009
(73) Patentinhaber: Mafell AG, 78727 Oberndorf (DE)
(72) Erfinder: Hermle, Hans, 78661 Dietingen (DE); Richter, Manfred, 72189 Vöhringen (DE); Schellhammer, Karl, 72172 Sulz-Fischingen (DE)
(74) Vertreter: Manitz, Finsterwald & Partner GbR

(56) Entgegenhaltungen:
- DE-A1- 2 417 228
- US-A- 4 974 907
- US-A1- 2003 185 639

## Beschreibung

Die vorliegende Erfindung betrifft eine elektrische Bearbeitungsmaschine oder ein Elektrowerkzeug, insbesondere elektrische Stichsäge oder Oberfräse, mit einem System zum Abtransportieren von Spänen mittels eines Luftstroms, welches einen Blaskanal mit einer im Bereich eines Werkzeugs, insbesondere eines Sägeblatts oder eines Fräswerkzeugs, angeordneten Blasöffnung und einen Saugkanal mit einer gegenüber der Blasöffnung angeordneten Saugöffnung umfasst.

Bei derartigen Elektrowerkzeugen, z.B. Stichsägen oder Oberfräsen, werden die während der Bearbeitung eines Werkstücks anfallenden Späne durch den aus der Blasöffnung austretenden Luftstrom von dem Sägeblatt bzw. Fräswerkzeug weg und in den Saugkanal hineingeblasen. Der Saugkanal endet typischerweise am hinteren Ende des Elektrowerkzeugs in einem Absaugstutzen, an den eine externe Saugvorrichtung, beispielsweise ein Staubsauger, angeschlossen werden kann. Auf diese Weise wird ein zuverlässiges Abtransportieren der Späne gewährleistet.

Allerdings ist es in der Praxis häufig erwünscht, das Elektrowerkzeug auch ohne einen angeschlossenen Staubsauger einzusetzen. Da in diesem Fall kein aktives Entfernen der Späne aus dem Saugkanal erfolgt, sammelt sich mit der Zeit eine zunehmende Menge an Spänen in dem Saugkanal an, was zu dessen Verstopfung führen kann. Ein weiteres Problem kann darin bestehen, dass ein unerwünschter Wärmeübertrag von dem Luftstrom an das Elektrowerkzeug erfolgt.

Die Patentschrift US 4,974,907 A offenbart ein pneumatisches Beton-Trennschneidgerät, bei welchem die mittels einer Leitung bereitgestellte Druckluft an einer Abzweigung in einen ersten Luftstrom und einen zweiten Luftstrom aufgeteilt wird. Während der erste Luftstrom zur Kühlung gegen die Trennscheibe geblasen wird, wird der zweite Luftstrom zur Erzeugung eines Unterdrucks mittels Venturi-Effekt in ein Saugrohr geleitet.

Aufgabe der Erfindung ist es, eine elektrische Bearbeitungsmaschine zur Verfügung zu stellen, bei welcher auf einfache Weise ein Verstopfen des Saugkanals und ein unerwünschter Wärmeübertrag vermieden werden.

Die Lösung dieser Aufgabe erfolgt durch die Merkmale des Anspruchs 1.

Erfindungsgemäß weist das Elektrowerkzeug ein System zum Abtransportieren von Spänen mittels eines Luftstroms auf, welches derart gestaltet ist, dass ein Teil des zur Verfügung stehenden Luftstroms in den Blaskanal eintritt, um die Späne im Wesentlichen in Richtung der Saugöffnung zu blasen, und ein anderer Teil des zur Verfügung stehenden Luftstroms zwischen der Saugöffnung und einem Austrittsende in den Saugkanal eintritt, um mittels des Venturi-Effekts eine Abfuhr der Späne aus dem Saugkanal zu bewirkten.

Erfindungsgemäß wurde erkannt, dass die Notwendigkeit einer externen Saugvorrichtung dadurch umgangen werden kann, dass der zur Verfügung stehende Luftstrom geteilt wird, wobei ein Teil zur Erzeugung eines Unterdrucks in dem Saugkanals mittels des Venturi-Effekts genutzt wird. Der so erzeugte Unterdruck reicht aus, um eine aktive Abfuhr der Späne aus dem Saugkanal zu bewirken, wodurch eine Verstopfung des Saugkanals vermieden wird. Die erfindungsgemäße Bearbeitungsmaschine kann daher auch ohne angeschlossenen Staubsauger problemlos eingesetzt werden. Ein weiterer Vorteil des Prinzips der Erfindung besteht darin, dass ein Teil des gegebenenfalls warmen Luftstroms auf relativ kurzem Weg aus der Maschine abgeführt wird und so der Wärmeübertrag von dem Luftstrom an die Maschinenkömponenten verringert wird.

Bevorzugte Ausführungsformen der Erfindung sind in den abhängigen Ansprüchen, der Beschreibung sowie der Zeichnung beschrieben.

Die Erfindung wird im Folgenden beispielhaft unter Bezugnahme auf die Zeichnung beschrieben, welche schematisch eine Ansicht auf die Oberseite einer Grundplatte einer erfindungsgemäßen Stichsäge zeigt.

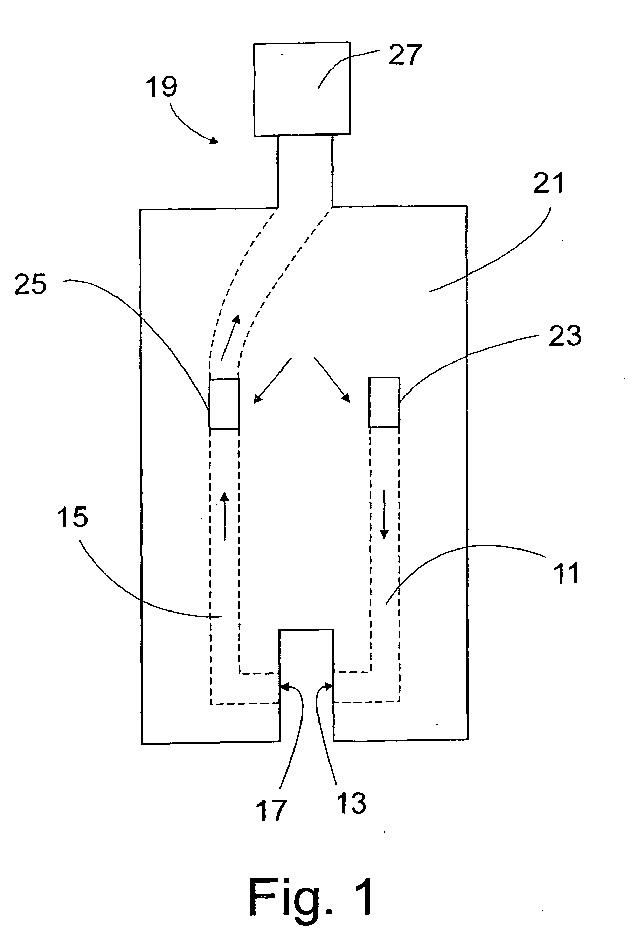

Auf der in Fig. 1 dargestellten Grundplatte 21 ist der nicht gezeigte Maschinenteil einer hier als Beispiel für ein erfindungsgemäßes Elektrowerkzeug beschriebenen elektrischen Stichsäge angeordnet. Der Maschinenteil kann einen Elektromotor mit Kühlgebläse, einen Kraftübertragungsmechanismus und ein Sägeblatt umfassen. Er kann ferner lösbar mit der Grundplatte 21 verbindbar, z.B. auf diese aufsteckbar sein. In die Grundplatte 21 ist ein System zum Abtransportieren von Sägespänen mittels eines von dem Motorgebläse erzeugten Luftstroms integriert. Hierzu ist in der Grundplatte 21 ein Blaskanal 11 und ein Saugkanal 15 ausgebildet, wobei in der Oberseite der Grundplatte 21 jeweils eine Öffnung 23, 25 zum Zuführen des Luftstroms an den Blaskanal 11 und den Saugkanal 15 vorgesehen ist. Bei aufgestecktem Maschinenteil wird während des Betriebs eine von dem Motorgebläse erzeugte Luftströmung (in Fig. 1 durch Pfeile schematisch dargestellt) über die Öffnung 23 zur Blasöffnung 13 geleitet. Die Saugöffnung 17 wiederum steht über den Saugkanal 15 mit einem Austrittsende 19 in Verbindung, welches beispielsweise als Saugstutzen ausgebildet sein kann, an den auf herkömmliche Weise der Schlauch eines Staubsaugers anschließbar ist.

Das nicht gezeigte Sägeblatt ist senkrecht zur Oberseite der Grundplatte in einer Ausnehmung der Grundplattenvorderseite angeordnet und befindet sich im Wesentlichen zwischen der Blasöffnung 13 und der Saugöffnung 17. Somit ergibt sich eine Luftströmung zwischen der Blasöffnung 13 und der Saugöffnung 17, die quer zu der Arbeitsrichtung der Stichsäge verläuft und die anfallende Sägespäne in den Saugkanal 15 hinein befördert.

Die Öffnungen 23, 25 zum Zuführen des Luftstroms sind nebeneinander angeordnet und befinden sich an einer Stelle der Grundplatte 21, auf welche bei aufgestecktem Maschinenteil die aus dem Motorgebläse austretende Luftströmung auftrifft. Daher tritt ein Teil der aus dem Maschinenteil austretenden Luftströmung in die Öffnung 23 ein und wird durch den Blaskanal 11 in Richtung der Blasöffnung 13 geleitet, während ein anderer Teil der bereitgestellten Luftströmung in die Öffnung 25 eintritt und durch den hinteren Bereich des Saugkanals 15 in Richtung Austrittsende 19 geleitet wird. Die mit hoher Geschwindigkeit in den Saugkanal 15 einströmende Luft erzeugt aufgrund des Venturi-Effekts einen Unterdruck im Bereich der Öffnung 25. Dieser Unterdruck bewirkt, dass Sägespäne, welche sich zwischen der Saugöffnung 17 und der Öffnung 25 im Saugkanal 15 befinden, angesaugt und in Richtung Austrittsende 19 befördert werden. Um einen besonders effizienten Unterdruck zu erzeugen, kann die Öffnung 25 zusätzlich mit einer Vorrichtung zur Erhöhung der Strömungsgeschwindigkeit, beispielsweise einer Venturi-Düse, versehen sein.

Am Austrittsende 19 des Saugkanals 15 ist eine Umlenkeinheit 27 lösbar angebracht, welche in der Lage ist, den aus dem Saugkanal 15 austretenden Luftstrom in Richtung der Oberseite des zu bearbeitenden Werkstücks zu leiten und so ein geordnetes Platzieren der abgeführten Sägespäne auf dem Werkstück herbeizuführen. Die Umlenkeinheit 27 kann beispielsweise in Form eines Ableit- oder Profilaufsatzes mit geeigneten Luftleitwänden vorgesehen sein.

Bei einer Verwendung der Stichsäge ohne angeschlossenen Staubsauger wird das Maschinenteil auf die Grundplatte 21 gesteckt und ein Sägeschnitt an einem Werkstück wird durchgeführt. Die durch das Motorgebläse erzeugte Luftströmung wird sowohl als Blasstrom zum Blasen der anfallenden Sägespäne in die Saugöffnung 17 als auch zur aktiven Abfuhr der Sägespäne aus dem Saugkanal 15 genutzt. Die Säge kann somit beliebig lange ohne angeschlossenen Staubsauger verwendet werden, ohne eine Verstopfung des Saugkanals 15 zu riskieren. Die Umlenkeinheit 27 bewirkt darüber hinaus, dass die abgeführten Sägespäne nicht ungeordnet in der Umgebung des Austrittsendes verteilt werden und somit eine hohe Staubbelastung verursachen, sondern in Form einer geraden Linie auf dem Werkstück angehäuft werden. Diese geordnete Anhäufung der Sägespäne erleichtert die spätere Reinigung des Werkstücks erheblich.

Wenn mit externer Absaugung gearbeitet werden soll, so wird die Umlenkeinheit 27 von dem Austrittsende 19 abgenommen und der Schlauch des bereitgestellten Staubsaugers wird auf das Austrittsende 19 aufgesteckt. Das Sägen mit Absaugung erfolgt dann in gewohnter Weise, wobei die zusätzliche Abfuhr der Späne aus dem Saugkanal 15 die Absaugung durch den Staubsauger nicht weiter beeinträchtigt.

Die erfindungsgemäße Stichsäge kann also sowohl mit als auch ohne externe Absaugung verwendet werden, ohne dass die Gefahr einer Verstopfung des Saugkanals 15 besteht. Ferner wird ein Teil der vom Gebläse gelieferten Motorwärme auf relativ kurzem Weg abgeführt, ohne durch den gesamten Kanal 11 und den Abschnitt des Saugkanals 15 zwischen Saugöffnung 17 und Öffnung 25 hindurchgeleitet zu werden und dabei in unerwünschter Weise eine beträchtliche Wärmemenge an die Grundplatte 21 abzugeben.

### Bezugszeichenliste

- 11: Blaskanal
- 13: Blasöffnung
- 15: Saugkanal
- 17: Saugöffnung
- 19: Austrittsende
- 21: Grundplatte, Grundkörper
- 23: Öffnung
- 25: Öffnung
- 27: Umlenkeinheit

## Patentansprüche

1. Elektrowerkzeug, insbesondere elektrische Stichsäge oder Oberfräse, mit einem System zum Abtransportieren von Spänen mittels eines Luftstroms, welches einen Blaskanal (11) mit einer im Bereich eines Werkzeugs, insbesondere eines Sägeblatts oder eines Fräswerkzeugs, angeordneten Blasöffnung (13) und einen Saugkanal (15) mit einer gegenüber der Blasöffnung (13) angeordneten Saugöffnung (17) umfasst und welches derart gestaltet ist, dass ein Teil des zur Verfügung stehenden Luftstroms in den Blaskanal (11) eintritt, um die Späne im Wesentlichen in Richtung der Saugöffnung (17) zu blasen, und ein anderer Teil des zur Verfügung stehenden Luftstroms zwischen der Saugöffnung (17) und einem Austrittsende (19) in den Saugkanal (15) eintritt, um mittels des Venturi-Effekts eine Abfuhr der Späne aus dem Saugkanal (15) zu bewirken.

2. Elektrowerkzeug nach Anspruch 1,
**dadurch gekennzeichnet,**
**dass** der Luftstrom durch ein Motorgebläse erzeugt wird.

3. Elektrowerkzeug nach Anspruch 1 oder 2,
**dadurch gekennzeichnet,**
**dass** der Blaskanal (11) und der Saugkanal (15) in einer Grundplatte oder einem Grundkörper (21) des Elektrowerkzeugs ausgebildet sind, wobei in der Oberseite der Grundplatte (21) jeweils eine Öffnung (23, 25) zum Zuführen des Luftstroms an den Blaskanal (11) und den Saugkanal (15) vorgesehen ist.

4. Elektrowerkzeug nach einem der vorhergehenden Ansprüche,
**dadurch gekennzeichnet,**
**dass** am Austrittsende (19) des Saugkanals (15) eine Umlenkeinheit (27) vorgesehen ist, welche in der Lage ist, den aus dem Saugkanal (15) austretenden Luftstrom in Richtung der Oberseite des zu bearbeitenden Werkstücks zu leiten und so ein geordnetes Platzieren der abgeführten Späne auf dem Werkstück herbeizuführen.

## Claims

1. An electrical tool, in particular electrical jigsaw or router having a system for transporting cuttings away by means of an airflow which includes a blowing passage (11) having a blowing opening (13) arranged in the region of a tool, in particular of a saw blade or a milling tool, and a suction passage (15) having a suction opening (17) arranged opposite to the blowing opening (13) and which is designed such that a part of the airflow available enters into the blowing passage (11) in order to blow the cuttings essentially in the direction of the suction opening (17) and another part of the airflow that is available enters into the suction passage (15) between the suction opening (17) and an outlet end (19) in order to bring about the removal of the cuttings from the suction passage by means of the Venturi effect.

2. An electrical tool in accordance with claim 1,
**characterised in that**
the airflow is generated by a motorized fan.

3. An electrical tool in accordance with claim 1 or claim 2,
**characterised in that**
the blowing passage (11) and the suction passage (15) are formed in a base plate or in a base body (21) of the electrical tool, with in each case an opening (23, 25) being provided in the topside of the base plate (21) for the supply of the airflow to the blowing passage (11) and to the suction passage (15).

4. An electrical tool in accordance with any one of the preceding claims,
**characterised in that**
a deflection unit (27) is provided at the outlet end (19) of the suction passage (15) which is able to direct the airflow emerging from the suction passage (15) in the direction of the upper side of the workpiece being machined and thus to bring about an orderly placement of the removed cuttings on the workpiece.

## Revendications

1. Outil électrique, en particulier scie sauteuse électrique ou défonceuse, comprenant un système pour l'évacuation des copeaux au moyen d'un flux d'air, qui comprend un canal de soufflage (11) avec une ouverture de soufflage (13) agencée dans la région d'un outil, en particulier d'une lame de scie ou d'un outil de fraisage, et un canal d'aspiration (15) avec une ouverture d'aspiration (17) agencée à l'opposé de l'ouverture de soufflage (13), et qui est conçu de telle façon qu'une partie du flux d'air à disposition pénètre dans le canal de soufflage (11) pour souffler les copeaux essentiellement en direction de l'ouverture d'aspiration (17), et qu'une autre partie du flux d'air à disposition entre l'ouverture d'aspiration (17) et une extrémité de sortie (19) pénètre dans le canal d'aspiration (15), pour entraîner une évacuation des copeaux hors du canal d'aspiration (15) au moyen de l'effet Venturi.

2. Outil électrique selon la revendication 1,
**caractérisé en ce que** le flux d'air est engendré par une soufflante à moteur.

3. Outil électrique selon la revendication 1 ou 2,
**caractérisé en ce que** le canal de soufflage (11) et le canal d'aspiration (15) sont réalisés dans une plaque de base ou dans un corps de base (21) de l'outil électrique, et dans la face supérieure de la plaque de base (21) il est prévu des ouvertures respectives (23, 25) pour l'admission du flux d'air vers le canal de soufflage (11) et vers le canal d'aspiration (15).

4. Outil électrique selon l'une des revendications précédentes,
**caractérisé en ce qu'**à l'extrémité de sortie (19) du canal d'aspiration (15) il est prévu une unité de déflexion (27) qui est en mesure de mener le flux d'air sortant du canal d'aspiration (15) en direction de la face supérieure de la pièce à oeuvrer, et d'entraîner ainsi une mise en place ordonnée des copeaux évacués sur la pièce à oeuvrer.
